# EUROPÄISCHE PATENTSCHRIFT

(11) **EP 3 312 253 B1**
(45) Veröffentlichungstag und Bekanntmachung des Hinweises auf die Patenterteilung: **25.01.2023**
(21) Anmeldenummer: 17197435.5
(22) Anmeldetag: 20.10.2017
(51) Int. Cl.: C09J 7/38, D06M 10/02

(54) **PHYSIKALISCHE VORBEHANDLUNG ZUR FILAMENTEINBINDUNG**
PHYSICAL PRETREATMENT FOR ENCAPSULATING A FILAMENT
PRÉTRAITEMENT PHYSIQUE D'ALIGNEMENT DE FILAMENT

(30) Priorität: 21.10.2016 DE 102016220082
(43) Veröffentlichungstag der Anmeldung: 25.04.2018
(73) Patentinhaber: tesa SE, 22848 Norderstedt (DE)
(72) Erfinder: Hähnel, Marcel, 25336 Klein Nordende (DE); Kipke, Jennifer, 20257 Hamburg (DE); Nagel, Christoph, 22417 Hamburg (DE); Sellin, Jannik, 22767 Hamburg (DE)
(74) Vertreter: tesa SE

(56) Entgegenhaltungen:
- DE-A1- 4 125 157
- DE-A1-102011 008 430
- DE-A1-102012 220 286
- DE-A1-102012 223 108
- US-A- 4 606 930

## Beschreibung

Die Erfindung betrifft ein Verfahren zur Herstellung eines Klebebandes, die Erfindung betrifft auch ein Klebeband.

Im Stand der Technik sind sogenannte Transportsicherungsbänder bekannt, zu deren Herstellung im Wesentlichen drei Trägerfolienmaterialien eingesetzt werden: MOPP, (gerecktes) PET und Laminate aus dünnen BOPP/PET Trägerfolien mit Glasfasern und PET Fasern.

Während einige Eigenschaften der Transportklebebänder auf die Klebmasseschicht oder weitere Funktionsschichten des Transportklebebandes zurückzuführen sind, basieren die Dehnbarkeit und die Zugfestigkeit des Transportklebebandes im Wesentlichen auf den physikalischen Eigenschaften des verwendeten Trägerfolienmaterials des Transportklebebandes.

Für Transportsicherungsklebebänder werden aufgrund der besonderen mechanischen Ansprüche in der Regel orientierte Trägerfolien eingesetzt. Durch Orientierung gleichbedeutend mit einer Verstreckung der primär im Herstellprozess gebildeten Primärfolie in einer oder mehrerer Vorzugsrichtungen lassen sich die mechanischen Eigenschaften gezielt beeinflussen. So genannte biaxial orientierte Folien können sequentiell verstreckt werden, wobei die Primärfolie nach Bildung durch Extrusion mit einer Breitschlitzdüse zunächst in Maschinenrichtung verstreckt wird, indem sie über eine Abfolge von Walzen geführt wird, wobei die Transportgeschwindigkeit der Folie größer ist als die Geschwindigkeit beim Austritt aus der Extrusionsdüse. Anschließend wird die Folie in einem Streckwerk in Querrichtung verstreckt. Das Verstrecken der Folie in zwei Richtungen kann auch in einem Schritt ausgeführt werden (vergleiche zum Beispiel US 4,675,582 A und US 5,072,493 A).

Ebenfalls finden sich im Markt für Klebebänder solche, deren BOPP-Trägerfolien im Blasfolienverfahren verstreckt worden sind.

In einer bevorzugten Ausführungsform werden Trägerfolien für Transportsicherungsklebebänder ausschließlich in Maschinenrichtung verstreckt. Mit diesem Verfahren lassen sich Polypropylenfolien mit den höchsten Zugfestigkeiten und Modulen erzielen. Üblicherweise beträgt das verwendete Streckverhältnis, das heißt der Quotient aus Länge eines Primärfolienkompartiments zu dem entsprechenden des Endprodukts, zwischen 1:5 bis 1:10. Besonders bevorzugt werden Streckverhältnisse zwischen 1:7 und 1:8,5. Die sehr hohe Dehnungsresistenz von ausschließlich monoaxial orientierten Polypropylenfolien ist eine der wesentlichsten Eigenschaften für den Einsatz.

Das Wirkprinzip der Orientierung liegt in der Ausrichtung der Polymermolekülketten und der daraus gebildeten Kristallstrukturen sowie in der Ausrichtung der amorphen Bereiche in bestimmte Vorzugsrichtungen und der damit verbundenen Festigkeitszunahme. Prinzipbedingt wird dabei aber auch die Festigkeit in diejenige Richtung, in welche nicht orientiert wird, verringert. Entsprechend findet sich im Falle der BOPP- und BOPET-Folien und ganz besonders im Falle der MOPP-Folien eine deutlich geringere Festigkeit der Folien in der z-Richtung (in Richtung der geringsten Ausdehnung der Folie).

Nachteil von herkömmlichem MOPP und gerecktem PET ist unter anderem, dass sie eine hohe Dehnbarkeit von größer 25 bis 30 % aufweisen und somit unter Belastung stark nachgeben. Durch diese Dehnung kann sich das mit einem derartigen Klebeband gesicherte Transportgut lösen und ist nicht mehr ausreichend gesichert.

MOPP und gerecktes PET haben zudem den Nachteil, dass sie bei Verletzung der Kante sehr leicht durchreißen. Da bei üblichen Anwendungen auch Gegenstände mit scharfen Kanten gesichert werden müssen, kann das Klebeband hierbei leicht verletzt werden und dabei reißen.

BOPP und MOPP haben zusätzlich den Nachteil, dass sie bei Schockeinwirkung in Querrichtung leicht in Maschinenrichtung auseinanderplatzen, das heißt, sie haben eine geringe Schlagzugzähigkeit. Häufig werden die Klebebänder aber in Längsrichtung auf einen Spalt (zum Beispiel einer Kühlschranktür) aufgeklebt. Während des Transports können dabei große Kräfte in Querrichtung auf das Klebeband einwirken, wodurch sie in Längsrichtung auseinanderreißen. Die Funktion als Transportsicherung ist damit nicht mehr gewährleistet.

Zur Verbesserung können Klebebänder neben der Trägerfolie aus beispielsweise gerecktem PET oder BOPP mit Filamenten aus Glasfasern verstärkt werden. Die Filamente geben dem Klebeband eine hohe Zugfestigkeit. Je nach Material besitzen sie eine definierte Dehnbarkeit, für geringe Dehnung werden vorzugsweise Glasfaserfilamente eingesetzt.

Alle monodirektionalen Verstärkungen geben dem Klebeband keine Zugfestigkeit in Querrichtung, das heißt, der oben beschriebene Nachteil bei der beispielhaften Applikation auf einen (Tür-)Spalt bleibt erhalten. Zugfestigkeit und Schlagzugzähigkeit in Querrichtung werden nicht verbessert.

Nachteilig an den bekannten Klebebändern ist, dass die Filamente aufgrund ihrer Oberflächeneigenschaften unterschiedlich fest in die Klebmasse eingebunden werden.

Die DE 10 2012 220 286 A1 offenbart eine Haftklebemassenschicht, die mit Atmosphärendruckplasma behandelt wird. In Der Klebemasse können auch Filamente vorhanden sein. Eine Vorbehandlung der Filamente mit einem Plasma wird nicht erwähnt.

Aus der DE 41 25 157 A1 sind Verbundwerkstoffe bekannt, die mit Glasfasern oder textilen Glasfaserflächengebilden, die zusätzlich im Plasma mit einer fluorhaltigen Verbindung modifiziert werden, verstärkt sind.

Aus der DE 10 2012 223 108 A1 ist ein Verfahren zur Herstellung von fadenverstärkten Gummiteilen bekannt, bei dem die Verstärkungsfäden vor ihrer Vereinigung mit der Gummimasse zur Modifizierung ihrer Oberfläche einer Plasmabehandlung unterzogen werden.

Die US 4,606,930 A beschreibt ebenfalls ein Verfahren zur Behandlung von Fasern.

Die DE 10 2011 008 430 A1 offenbart ein hitzeaktivierbares, faserverstärktes strukturelles Klebemittel, wobei das Klebemittel aus einer Trägerfolie, einer fixierenden Klebstoffschicht mit darauf aufgebrachten verstärkenden Fasern sowie einer hitzeaktivierbaren Klebstoffschicht besteht. Eine Plasmavorbehandlung der Fasern zwecks Verbesserung der Verankerung ist nicht gezeigt.

Es ist daher Aufgabe der vorliegenden Erfindung, ein Verfahren zur Herstellung eines Klebebandes zur Verfügung zu stellen, das eine hohe Zugfestigkeit aufweist, dennoch in der Herstellung einfach ist und eine gute Einbindung des Filaments in der Klebmasse aufweist.

Diese Aufgabe wird in ihrem ersten Aspekt durch ein Verfahren mit den Merkmalen des Anspruchs 1 gelöst.

Die Erfindung macht von der Idee Gebrauch, einen Liner oder eine Trägerfolie auf einer Seite vorzugsweise vollflächig mit einer Haftklebmasseschicht zu versehen und wenigstens ein Filament mit einem Plasma zu behandeln.

Vorzugsweise wird eine Oberfläche, vorzugsweise die gesamte Oberfläche des wenigstens einen Filaments plasmabehandelt und in die Haftklebmasseschicht eingebracht; aufgrund der Plasmabehandlung der vorzugsweise gesamten Oberfläche des Filaments wird das Filament sehr fest in die es umgebende Klebmasse der Haftklebmasseschicht eingebunden.

Vorzugsweise wird das plasmabehandelte Filament auf eine Oberfläche einer ersten Haftklebmasseschicht aufgelegt. Die Filamente sinken in die Haftklebmasse ein. Spätestens beim Aufbringen des Klebebands werden die Filamente in die Haftklebemasse gedrückt, so dass diese von der Haftklebemasse umflossen werden. Bevorzugt wird dann eine zweite Klebmasseschicht auf die erste Haftklebmasseschicht und das wenigstens eine Filament aufgebracht.

Die erste und zweite Klebmasseschicht können dieselbe Klebmasse oder verschiedene Klebmassen umfassen oder aus ihnen bestehen.

Es ist auch vorgesehen, sowohl das wenigstens eine Filament und die erste Haftklebmasseschicht mit Plasma zu behandeln.

Das erfindungsgemäße Herstellungsverfahren macht zunächst von der Verwendung eines Liners oder einer Trägerfolie Gebrauch, auf die die Haftklebmasseschicht unmittelbar oder unter zusätzlicher Aufbringung von weiteren Schichten aufgebracht wird.

Als Trägerfolie eignen sich insbesondere Folien wie zum Beispiel PA, PU, PVC, Polyolefine oder Polyester, bevorzugterweise ein Polyester von PET (Polyethylenterephthalat). Die Folien selbst können wiederum aus mehreren einzelnen Lagen bestehen, beispielsweise aus zu Folie coextrudierten Lagen.

Bevorzugt werden Polyolefine, es sind auch Copolymere aus Ethylen und polaren Monomeren wie Styrol, Vinylacetat, Methylmethacrylat, Butylacrylat oder Acrylsäure geeignet. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-Block-Copolymere).

Erfindungsgemäß hervorragend als Folien einsetzen lassen sich monoaxial und biaxial gereckte Folien. Monoaxial gerecktes Polypropylen beispielsweise zeichnet sich durch seine sehr hohe Reißfestigkeit und geringe Dehnung in Längsrichtung aus.

Besonders bevorzugt sind Folien auf Basis von Polyester, insbesondere solche aus Polyethylenterephthalat.

Die Folie weist vorzugsweise eine Dicke von 12 µm bis 100 µm, weiter vorzugsweise von 28 µm bis 50 µm, insbesondere 36 µm auf.

Die Folie kann farbig und/oder transparent sein.

Um bei den erfindungsgemäßen trägerlosen Klebebändern, die nur aus einer, aus zwei oder aus mehreren Klebemasseschichten bestehen, zu verhindern, dass die Haftklebemassen miteinander in Kontakt kommen, werden die Klebebänder vor dem Wickeln auf einen Liner aufgebracht, der zusammen mit dem Klebeband aufgewickelt wird. Dem Fachmann sind derartige Liner auch unter den Namen Releaseliner bekannt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Antiadhäsive Beschichtungsmassen werden in großem Umfang zur Herstellung von Linern in der Beschichtung insbesondere von flächigen Materialien wie Papieren oder Folien verwendet, um die Adhäsionsneigung von adhärierenden Produkten gegenüber diesen Oberflächen zu verringern.

Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Allerdings muss der Liner vom Klebeband abziehbar sein. Durch den Liner selbst oder durch das Abziehen des Liners darf die Klebkraft der Haftklebemasse nicht wesentlich für die spätere Verwendung beeinträchtigt werden.

Gleichzeitig ist die Stabilität der antiadhäsiven Beschichtung (auch als Trennbeschichtung bezeichnet) auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Trennmittel, auch Release genannt, können auf verschiedene Weise ausgebildet sein. Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄-C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-)siloxanen. Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 der EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew.-%, besonders bevorzugt 13 bis 18 Gew.-% des trennwirksamen Bestandteils.

Unter wenigstens einem Filament werden hier entweder einzelne faserartige, längliche Fäden verstanden oder vorzugsweise ein Filamentgelege oder Filamentgewebe, beispielsweise Kettenstrickgewebe mit Schussfäden, wie sie beispielsweise in der EP 1 818 437 A1 beschrieben sind.

Besonders bevorzugt werden Filamentgelege oder Filamentgewebe eingesetzt.

Das Filamentgelege oder -gewebe weist eine Zugfestigkeit in Maschinenrichtung von vorzugsweise mindestens 100 N/cm, weiter vorzugsweise 200 N/cm, besonders vorzugsweise 1000 N/cm auf.

Vorzugsweise weisen die zur Bildung des Geleges oder des Gewebes verwendeten Garne eine Stärke von 80 bis 2200 dtex, vorzugsweise 280 bis 1100 dtex auf.

Im Sinne dieser Erfindung wird unter einem Filament ein Bündel paralleler gerader Einzelfasern verstanden, die in der Literatur auch oft als Multifilament bezeichnet werden. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet. Das Filament kann texturiert oder glatt und punktverfestigt oder unverfestigt vorliegen.

Vorzugsweise werden die Einzelfilamente mittels eines Bindemittels einer sogenannten Schlichte zu dem wenigstens einen Filament zusammengeklebt.

Bevorzugt bestehen die Einzelfilamente aus der Gruppe PET-Fasern, Kohlefasern, Keflarfasern oder Glasfasern, die Einzelfilamente können auch aus Polyester, Polypropylen, Polyethylen oder Polyamid, bevorzugt Polyester (Diolen) bestehen.

Die Filamente werden bevorzugt jeweils aus Einzelfilamenten desselben Materials gebildet, es ist aber auch denkbar, die Filamente durch Bündelung von Einzelfilamenten verschiedener Materialen zu fertigen.

Gemäß einer bevorzugten Ausführungsform der Erfindung werden Glasfasern zur Filamentbildung verwendet. Dabei bildet eine Glasfaser ein Einzelfilament im oberen Sinne aus. Die Einzelfilamente können auch mit Hilfe von Bindemitteln, sogenannter Avivage oder Schlichte, zu einem Filament gebündelt werden. Dabei werden die Einzelfilamente leicht miteinander verklebt. Das Filament wird dann vorzugsweise ausschließlich aus Glasfasereinzelfilamenten gebildet.

Je nach verwendeter Schlichte weist das Filament, das aus einem Bündel aus Einzelfilamenten, vorzugsweise Einzelglasfasern besteht, eine unterschiedliche Oberflächenbeschaffenheit und unterschiedliche Oberflächeneigenschaften auf, die dazu führen, dass die Filamente unterschiedlich fest in die sie umgebende Haftklebmasse eingebunden werden. Für die Einbindung des Filaments in die Haftklebmasse ist unter anderem die Benetzung und Verankerung des Filaments mit der Haftklebmasse ursachlich.

Um das erfindungsgemäße Klebeband herstellen zu können, kann auf alle bekannten Klebmassesysteme zurückgegriffen werden.

Neben natur- oder synthesekautschukbasierten Klebmassen sind insbesondere Silikonklebmassen sowie Polyacrylatklebmassen, vorzugsweise eine niedermolekulare Acrylatschmelzhaftklebmasse, verwendbar. Letztere sind in der DE 198 07 752 A1 sowie in der DE 100 11 788 A1 näher beschrieben. Auch acrylatbasierende, UV-vernetzende Klebemassen sind geeignet.

Das Auftragsgewicht bewegt sich vorzugsweise im Bereich zwischen 15 bis 200 g/m², weiter vorzugsweise zwischen 30 bis 120 g/m², besonders bevorzugt 50 g/m² (entspricht ungefähr einer Dicke von 15 bis 200 µm, weiter vorzugsweise zwischen 30 bis 120 µm, besonders bevorzugt bei 50 µm).

Die (erste) Klebmasse ist eine Haftklebmasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Als Haftklebmassen finden solche auf Basis von Blockcopolymere enthaltenden Polymerblöcken Anwendung. Gebildet werden diese bevorzugt von Vinylaromaten (A-Blöcke) wie zum Beispiel Styrol und solchen durch Polymerisation von 1,3-Dienen (B-Blöcke) wie zum Beispiel Butadien und Isopren oder einem Copolymer aus beiden. Es können auch Mischungen unterschiedlicher Blockcopolymere zum Einsatz kommen. Bevorzugt werden Produkte eingesetzt, die zum Teil oder vollständig hydriert sind.

Die Blockcopolymere können eine lineare A-B-A-Struktur aufweisen. Einsetzbar sind ebenfalls Blockcopolymere von radialer Gestalt sowie sternförmige und lineare Multiblockcopolymere.

Anstelle der Polystyrolblöcke können auch Polymerblöcke auf Basis anderer aromatenhaltiger Homo- und Copolymere (bevorzugt C₈- bis C₁₂-Aromate) mit Glasübergangstemperaturen von > ca. 75 °C genutzt werden wie zum Beispiel α-methylstyrolhaltige Aromatenblöcke. Gleichfalls sind Polymerblöcke auf Basis von (Meth)acrylathomo- und (Meth)acrylatcopolymeren mit Glasübergangstemperaturen von > +75 °C nutzbar. Hierbei können sowohl Blockcopolymere zum Einsatz kommen, welche als Hartblöcke zum einen ausschließlich solche auf Basis von (Meth)acrylatpolymeren nutzen als zum anderen auch solche, die sowohl Polyaromatenblöcke, zum Beispiel Polystyrolblöcke, als auch Poly(meth)acrylatblöcke nutzen.

Die Angaben zur Glasübergangstemperatur für nicht anorganische und nicht überwiegend anorganische Materialien, insbesondere für organische und polymere Materialien, beziehen sich auf den Glasübergangstemperatur-Wert Tg nach DIN 53765:1994-03 (vgl. Abschnitt 2.2.1), sofern im Einzelfall nichts anderes angegeben ist.

Anstelle von Styrol-Butadien-Blockcopolymeren und Styrol-Isopren-Blockcopolymeren und/oder deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte genutzt werden, welche weitere polydienhaltige Elastomerblöcke nutzen wie zum Beispiel Copolymere mehrerer unterschiedlicher 1,3-Diene. Erfindungsgemäß nutzbar sind des weiteren funktionalisierte Blockcopolymere wie zum Beispiel maleinsäureanhydridmodifizierte oder silanmodifizierte Styrolblockcopolymere.

Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze.

Geeignete Klebharze sind unter anderem vorzugsweise partiell oder vollständig hydrierte Harze auf Basis von Kolophonium oder Kolophoniumderivaten. Es können auch zumindest zum Teil hydrierte Kohlenwasserstoffharze, zum Beispiel hydrierte Kohlenwasserstoffharze, erhalten durch teilweise oder vollständige Hydrierung von aromatenhaltigen Kohlenwasserstoffharzen (zum Beispiel Arkon P und Arkon M Serien der Firma Arakawa oder Regalite-Serie von Eastman), Kohlenwasserstoffharze auf Basis von hydrierten Dicyclopentadien-Polymeren (zum Beispiel Escorez 5300er-Serie von Exxon), Kohlenwasserstoffharze auf Basis von hydrierten C5/C9-Harzen (Escorez 5600er-Serie von Exxon) oder Kohlenwasserstoffharze auf Basis von hydrierten C5-Harzen (Eastotac der Firma Eastman) beziehungsweise deren Gemische eingesetzt werden.

Auch hydrierte Polyterpenharze auf Basis von Polyterpenen sind verwendbar. Vorgenannte Klebharze können sowohl allein als auch im Gemisch eingesetzt werden.

Als weitere Additive können typischerweise Lichtschutzmittel wie zum Beispiel UV-Absorber, sterisch gehinderte Amine, Antiozonantien, Metalldesaktivatoren, Verarbeitungshilfsmittel, endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Die Haftklebmasse kann in Längsrichtung des Klebebands in Form eines Streifens aufgebracht sein, der eine geringere Breite aufweist als der Träger des Klebebands.

Der beschichtete Streifen kann eine Breite von 10 % bis 80 % der Breite des Trägermaterials haben. Besonders vorzugsweise erfolgt in einem solchen Fall der Einsatz von Streifen mit einer Beschichtung von 20 % bis 50 % der Breite des Trägermaterials.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Die Herstellung und Verarbeitung der Klebmassen kann aus Lösung, Dispersion sowie aus der Schmelze erfolgen. Bevorzugte Herstellungs- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebmassen mit Hilfe eines Extruders.

Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Schließlich kann das Klebeband mit der Trägerfolie zusätzlich ein Abdeckmaterial aufweisen, mit dem bis zum Gebrauch die eine Klebmasseschicht eingedeckt ist. Als Abdeckmaterialien eignen sich auch alle oben ausführlich aufgeführten Materialien.

Bevorzugt wird aber ein nicht-fusselndes Material eingesetzt wie eine Kunststofffolie oder ein gut verleimtes, langfaseriges Papier.

Da verschiedene Hersteller üblicherweise verschiedene Schlichten zur Bündelung der Einzelfilamente verwenden, besitzen die Filamente, obwohl sie aus materialgleichen Einzelfilamenten bestehen, unterschiedliche Oberflächeneigenschaften. Insbesondere können die statischen Scherkräfte, mit denen die Filamente in die Haftklebmasseschicht eigebunden sind, sehr unterschiedlich sein. Überraschenderweise hat sich nun gezeigt, dass durch die Behandlung der Filamentoberfläche mit Plasma die Filamentoberfläche derart verändert wird, dass sich die statischen Scherkräfte unabhängig von der verwendeten Schlichte angleichen und erhöhen, so dass beispielsweise Glasfaserfilamente unabhängig vom Hersteller gewählt werden können; durch die Plasmabehandlung der Filamentoberflächen werden Unterschiede in den Scherkräften des in die Haftklebmasse eingebundenen Filaments weitestgehend aufgehoben. Darüber hinaus erhöhen sich im statischen Schertest die Scherkräfte des plasmabehandelten Filaments in der Haftklebmasseschicht gegenüber dem nicht-plasmabehandelten Filament in der Haftk.

Die Oberfläche des wenigstens einen Filaments wird mit einem Plasma behandelt.

Plasma wird als vierter Aggregatzustand der Materie bezeichnet. Es handelt sich um ein teilweise bzw. vollständig ionisiertes Gas. Durch Energiezufuhr werden positive und negative Ionen, Elektronen und andere Aggregatzustände, Radikale, elektromagnetische Strahlungen und chemische Reaktionsprodukte erzeugt. Viele dieser Spezies können zur Veränderung der zu behandelnden Oberfläche, d. h. der zu behandelnden wenigstens einen Filamentoberfläche führen. In Summe führt diese Behandlung zu einer Aktivierung der wenigstens einen Filamentoberfläche, konkret einer höheren Reaktivität.

Eine Coronabehandlung, die zu den Plasmabehandlungen zählt, ist als eine durch hohe Wechselspannung zwischen zwei Elektroden erzeugte Oberflächenbehandlung mit filamentären Entladungen definiert, wobei die diskreten Entladungskanäle auf die zu behandelnde Oberfläche treffen, siehe dazu auch Wagner et al., Vacuum, 71 (2003), Seiten 417 bis 436. Ohne weitere Qualifizierung ist als Prozessgas Umgebungsluft, Kohlenstoffdioxid oder Stickstoff und weitere Gasgemische anzunehmen.

Insbesondere wird in industriellen Anwendungen meist unter dem Begriff "Corona" eine "dielektrische Barrierenentladung" (engl. dielectric barrier discharge, DBD) verstanden. Dabei besteht mindestens eine der Elektroden aus einem Dielektrikum, also einem Isolator, oder ist mit einem solchen beschichtet oder überzogen. Die zweite Elektrode weist kleine Radien oder Spitzen auf, um den Coronaeffekt, den Effekt großer Gradienten des elektrischen Feldes, zu erzeugen. Das Substrat kann hierbei auch als Dielektrikum fungieren.

Die Behandlungsintensität einer Coronabehandlung wird als "Dosis" in [Wmin/m²] angegeben, mit der Dosis D=P/b*v, mit P=elektrischer Leistung [W], b=Elektrodenbreite [m], und v=Bahngeschwindigkeit [m/min].

Fast immer wird das Substrat im Entladungsraum zwischen einer Elektrode und einer Gegenelektrode platziert oder hindurchgeführt, was als "direkte" physikalische Behandlung definiert ist. Bahnförmige Substrate werden dabei typischerweise zwischen einer Elektrode und einer geerdeten Walze hindurchgeführt.

Aus der FR 2 443 753 ist eine Vorrichtung zur Oberflächenbehandlung mittels einer Coronaentladung bekannt. Dabei sind die beiden Elektroden auf der gleichen Seite der zu behandelnden Oberfläche des Objektes angeordnet, wobei die ersten Elektroden aus einer Vielzahl von Punkten gebildet sind, entlang derer eine gekrümmte Anordnung einer zweiten Elektrode vorgesehen ist. Zwischen den beiden Elektroden wird eine Wechselspannung mit einigen kV mit einer Frequenz von 10 kHz angelegt. Die Coronaentladung entlang der Feldlinien beeinflusst dabei die vorbeigeführte Oberfläche und führt zu einer Polarisierung der Oberfläche, wodurch die Haftungseigenschaften einer Haftklebmasse auf der durch den Coronaeffekt behandelten Oberfläche verbessert werden.

Eine gleichmäßigere intensive Behandlung von Materialien verschiedener Art, Form und Dicke zu ermöglichen, besteht darin, Entladungsfilamente wie sie bei Coronaentladungen auftreten zu vermeiden, indem zum Beispiel gemäß der EP 0497996 B1 eine Doppelstiftelektrode gewählt wird, wobei für jede Stiftelektrode ein eigener Kanal zur Druckbeaufschlagung vorhanden ist. Zwischen den beiden Spitzen der Elektroden entsteht eine Entladung, die den durch die Kanäle strömenden Gasstrom ionisiert und in ein Plasma umwandelt. Dieses Plasma gelangt dann als Remote- oder Afterglow-Plasma durch den Gasstrom an die zu behandelnde Oberfläche und führt dort insbesondere eine Oberflächenoxidation durch, welche die Benetzbarkeit der Oberfläche verbessert. Die Art der physikalischen Behandlung wird (hier) als indirekt bezeichnet, weil die Behandlung nicht am Erzeugungsort der elektrischen Entladung vorgenommen wird. Die Behandlung der Oberfläche findet bei oder nahe bei Atmosphärendruck statt, wobei jedoch der Druck im elektrischen Entladungsraum oder Gaskanal erhöht sein kann. Unter dem Plasma wird hier ein Atmosphärendruckplasma verstanden, das ein elektrisch aktiviertes homogenes reaktives Gas ist, das sich nicht im thermischen Equilibrium befindet, mit einem Druck nahe dem Umgebungsdruck im Wirkbereich. Durch die elektrischen Entladungen und durch lonisierungsprozesse im elektrischen Feld wird das Gas aktiviert, und es werden hochangeregte Zustände in den Gasbestandteilen erzeugt. Das verwendete Gas oder die Gasmischung werden als Prozessgas bezeichnet. Als Prozessgase können Luft, Kohlenstoffdioxid, Edelgase oder Stickstoff oder deren Mischungen verwendet werden. Grundsätzlich können dem Prozessgas auch weitere gasförmige Stoffe wie zum Beispiel Siloxan, Acrylsäuren oder Lösungsmittel oder Wasserstoff, Alkane, Alkene, Alkine, Silane, siliziumorganische Monomere, Acrylatmonomere, Wasser, Alkohole, Peroxide und organische Säuren oder andere Bestandteile beigemischt werden. Bestandteile des Atmosphärendruckplasmas können hochangeregte atomare Zustände, hochangeregte molekulare Zustände, Ionen, Elektronen, unveränderte Bestandteile des Prozessgases sein. Das Atmosphärendruckplasma wird nicht in einem Vakuum erzeugt, sondern üblicherweise in Luftumgebung. Das bedeutet, dass das ausströmende Plasma, wenn das Prozessgas nicht selbst schon Luft ist, zumindest Bestandteile der umgebenden Luft enthält.

Bei einer Coronaentladung nach obiger Definition bilden sich durch die angelegte hohe Spannung filamentäre Entladungskanäle mit beschleunigten Elektronen und Ionen. Insbesondere die leichten Elektronen treffen mit hoher Geschwindigkeit auf die Oberfläche mit Energien, die ausreichen, um die meisten Molekülbindungen aufzubrechen. Die Reaktivität der außerdem entstehenden reaktiven Gasbestandteile ist meist ein untergeordneter Effekt. Die aufgebrochenen Bindungsstellen reagieren dann mit Bestandteilen der Luft oder des Prozessgases weiter. Ein entscheidender Effekt ist die Bildung kurzkettiger Abbauprodukte durch Elektronenbeschuss. Bei Behandlungen höherer Intensität tritt auch ein signifikanter Materialabtrag ein.

Durch die Reaktion eines Plasmas mit der Substratoberfläche werden verstärkt die Plasmabestandteile direkt "eingebaut". Alternativ können auf der Oberfläche ein angeregter Zustand oder eine offene Bindungsstelle und Radikale erzeugt werden, die dann sekundär weiterreagieren, zum Beispiel mit Luftsauerstoff aus der Umgebungsluft. Bei manchen Gasen wie Edelgasen ist keine chemische Bindung der Prozessgasatome oder Moleküle an das Substrat zu erwarten. Hier findet die Aktivierung des Substrats ausschließlich über Sekundärreaktionen statt.

Der wesentliche Unterschied ist also, dass bei der Plasmabehandlung keine direkte Einwirkung diskreter Entladungskanäle auf die Oberfläche stattfindet. Die Wirkung findet also homogen und schonend, vor allem über reaktive Gasbestandteile statt. Bei einer indirekten Plasmabehandlung sind freie Elektronen möglicherweise vorhanden, aber nicht beschleunigt, da die Behandlung außerhalb des zu erzeugenden elektrischen Feldes stattfindet.

Die Plasmabehandlung ist aufgrund der Spezieszusammensetzung schonender und homogener als eine Coronabehandlung, da keine diskreten Entladungskanäle auf die Oberfläche treffen. Es entstehen weniger kurzkettige Abbauprodukte des behandelten Materials, die eine Schicht mit negativem Einfluss auf der Oberfläche bilden können. Deswegen können oft bessere Benetzbarkeiten nach Plasmabehandlung gegenüber Coronabehandlung erzielt werden bei längerer Beständigkeit des Effekts.

Vorzugsweise wird eine erste Haftklebmasseschicht auf die Trägerfolie aufgebracht, und das wenigstens eine plasmabehandelte Filament wird auf die erste Haftklebmasseschicht aufgebacht, und weiter vorzugsweise eine zweite Klebmasseschicht wird auf das wenigstens eine plasmabehandelte Filament und die erste Haftklebmasseschicht aufgebacht.

Bei dieser Ausführungsform der Erfindung wird das wenigstens eine Filament dadurch in die Haftklebmasseschicht eingebracht, dass es gleichsam zwischen zwei Klebmasseschichten angeordnet wird. Die beiden Klebmasseschichten können die gleiche Klebmasse aufweisen. Sie können aber auch verschiedene Klebmassen aufweisen.

Die Trägerfolie wird zunächst mit einer Haftklebmasseschicht vorzugsweise vollflächig benetzt, und dann wird das vorzugsweise als Rollenware zur Verfügung gestellte Filament abgewickelt und direkt, bevor es auf die Haftk aufgelegt wird, mit einem Plasma bzw. einer Corona behandelt. Es ist alternativ auch möglich, das Filament mit Plasma zu behandeln und wieder aufzuwickeln und kurze Zeit später abzuwickeln und dann direkt auf die Haftklebmasseschicht aufzubringen. Abschließend wird in beiden Fällen noch eine weitere Klebmasseschicht aufgebracht. Wenn die Haftklebmasseschicht und die weitere Klebmasseschicht die gleiche Klebmasse aufweisen, ist das Filament in die Klebmasseschicht eingebettet.

Die Aufgabe wird in ihrem zweiten Aspekt durch ein Klebeband mit den Merkmalen des Anspruchs 9 gelöst. Das Klebeband wird vorzugsweise durch eines der oben beschriebenen Verfahren hergestellt.

Das erfindungsgemäße Klebeband umfasst eine Haftklebmasseschicht und wenigstens ein in die Haftk eingebrachtes Filament, wobei eine Oberfläche des wenigstens einen Filaments mit einem Plasma behandelt ist. Es können das wenigstens eine Filament und die Haftklebmasseschicht mit Plasma behandelt sein.

Die Erfindung wird anhand eines Ausführungsbeispiels in einer Figur beschrieben.

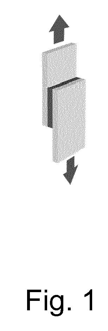

Dabei zeigen
- Fig. 1: eine schematische Darstellung eines statischen Schertests,
- Fig. 2: einen beispielhaften Aufbau eines erfindungsgemäßen Klebebands.

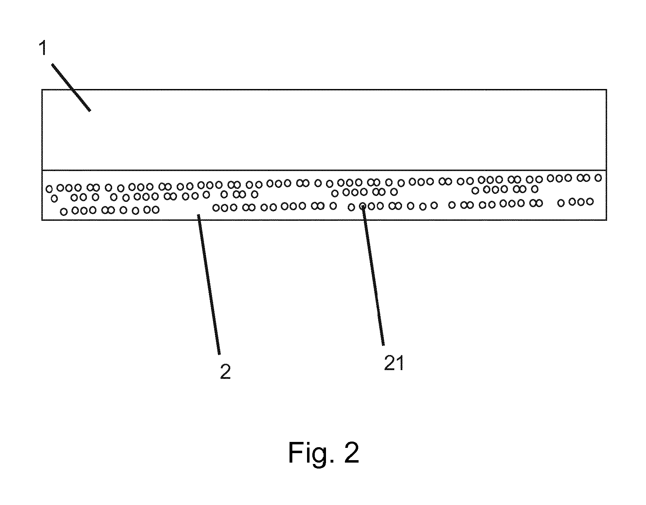

Eine Möglichkeit, die Einbindung eines Filaments in eine Haftklebmasseschicht zu prüfen, ist die Ermittlung der Scherbeständigkeit bei Verklebung auf einem gut zu beklebenden Untergrund. Als Untergrund wurde hier eine geätzte PET-Folie verwendet. Als Messmethode zur Bestimmung der Scherbeständigkeit wird ein herkömmlicher statischer Schertest verwendet, dessen Aufbau in Graphik 1 schematisch dargestellt ist. Die Prüfung wird wie folgt durchgeführt: Die geätzte PET-Folie wird vollflächig auf einer 2 x 25 x 50 mm großen Prüfplatte aus nicht geschliffenem Stahl befestigt. Auf die geätzte PET-Folie wird ein Klebebandstreifen von 40 x 13 mm auf einer Fläche von 20 x 13 mm verklebt; bei dem Klebebandstreifen handelt es sich um einen Folienträger 1, auf den eine aus Glasfaserfilamenten 21 bestehende Filamentschicht aufgelegt wurde, die mit einer Haftklebmasse 2 beschichtet wurde; als Haftklebmasse wurde hier Acrylatklebmasse verwendet. Figur 2 zeigt das Klebeband. An dem überstehenden Ende des Klebebandstreifens wird ein Gewicht befestigt. Eine Verklebungsfläche wird mit 10 Newton pro cm² für eine Minute angedrückt. Die Probe wird mit der Stahlplatte an einem Probenhalter befestigt und das Gewicht am überstehenden Ende des Klebebandstreifens befestigt. Gemessen wird die Zeitdauer, bis der Klebebandstreifen abgeschert wurde; das Versagensbild zeigt in diesem Fall ein adhäsives Versagen der Haftklebmasse auf der Filamentschicht, die Haftklebmasse bleibt somit auf der geätzten PET-Folie zurück.

Aus Vereinfachungsgründen ist bei dem Streifen die Klebemasse nur in der Verklebungsfläche gezeigt.

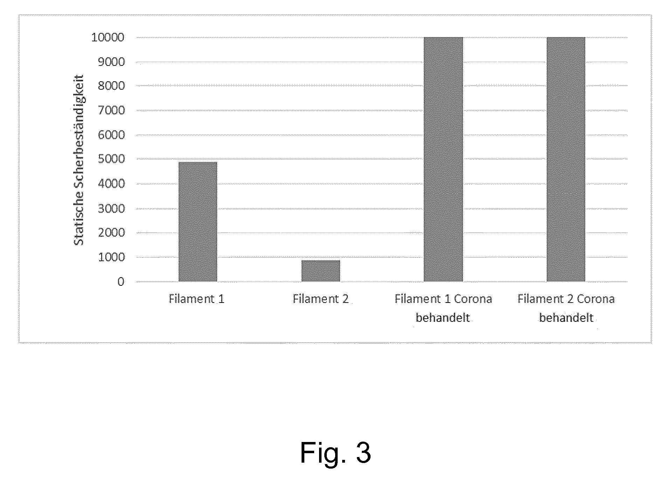

Es wurden Versuche mit zwei verschiedenen Glasfaserfilamenten unterschiedlicher Hersteller durchgeführt. Die beiden Glasfaserfilamente unterscheiden sich lediglich durch die verwendete Schlichte voneinander. Die Ergebnisse sind graphisch dargestellt:
Die Zeitdauer bis zur Ablösung ist in der Figur 3 dargestellt; bei dem ersten Filament betrug die Zeitdauer etwa 4.500 Minuten bis der Klebebandstreifen von der PET-Folie abgeschert wurde, im zweiten Versuch betrug die Zeitdauer nur etwa 1.000 Minuten.

Zusätzlich wurden die Scherwiderstände derselben Filamente nach einer Coronabehandlung vor der Beschichtung der Filamente mit Haftklebmasse gemessen.

Zunächst ist festzustellen, dass die Filamente unterschiedliche Scherwiderstände im unbehandelten Zustand aufweisen. Somit ist davon auszugehen, dass die Benetzbarkeit der Filamente unterschiedlich ist. Durch die Coronabehandlung als spezielle Form der Plasmabehandlung wird für beide Filamente der Scherwiderstand deutlich erhöht und angeglichen; es wird deutlich, dass die Plasmabehandlung trotz unterschiedlicher Benetzbarkeit der Rohfilamente zu einer vergleichbaren Benetzbarkeit nach der Plasmabehandlung führt. Durch die physikalische Oberflächenbehandlung der Filamente mittels Plasma können verschieden vorbehandelte Filamente gleichwertig in den Klebeverbund eingearbeitet werden.

### Bezugszeichenliste

- 1: Trägerfolie
- 2: Klebmasseschicht
- 21: Filamente

## Patentansprüche

1. Verfahren zur Herstellung eines Klebebandes, indem
ein Liner oder eine Trägerfolie auf wenigstens einer Seite mit einer Haftklebmasseschicht versehen wird und
wenigstens ein Filament mit einem Plasma behandelt wird und
das wenigstens eine Filament in die Haftklebmasseschicht eingebracht wird.

2. Verfahren nach Anspruch 1,
**dadurch gekennzeichnet, dass** eine erste Haftklebmasseschicht auf den Liner oder die Trägerfolie aufgebracht wird und eine Oberfläche des wenigstens einen Filaments plasmabehandelt wird und auf die erste Haftklebmasseschicht aufgebacht wird und weiter vorzugsweise eine zweite Klebmasseschicht auf das wenigstens eine plasmabehandelte Filament und die erste Haftklebmasseschicht aufgebacht wird.

3. Verfahren nach Anspruch 1 oder 2,
**dadurch gekennzeichnet, dass** Luft, Kohlenstoffdioxid, Edelgase oder Stickstoff oder deren Mischungen als Prozessgas zur Plasmabehandlung verwendet werden.

4. Verfahren nach Anspruch 3
**dadurch gekennzeichnet, dass** Wasserstoff, Alkane, Alkene, Alkine, Silane, siliziumorganische Monomere, Acrylatmonomere, Wasser, Alkohole, Peroxide und organische Säuren dem Prozessgas als Dampf oder Aerosole beigemischt werden.

5. Verfahren nacheinem der vorstehenden Ansprüche,
**dadurch gekennzeichnet, dass** das wenigstens eine Filament aus der Gruppe PET-Fasern, Kohlefasern, Keflarfasern oder Glasfasern gewählt wird.

6. Verfahren nach einem der einem der vorstehenden Ansprüche,
**dadurch gekennzeichnet, dass** das wenigstens eine Filament aus einem Bündel von Einzelfilamenten gebildet wird, die mit einer Schlichte verbunden werden.

7. Verfahren nach Anspruch 6,
**dadurch gekennzeichnet, dass** Glasfasern mit Schlichte zu einem Filament gebündelt werden und Filamente mit unterschiedlichen Schlichten zur Herstellung des Klebebandes verwendet werden und alle Filamente mit unterschiedlichen Schlichten plasmabehandelt werden.

8. Verfahren nach einem der vorstehenden Ansprüche,
**dadurch gekennzeichnet, dass** das wenigstens eine Filament über seine gesamte Ausdehnung plasmabehandelt wird.

9. Klebeband mit einer Haftklebmasseschicht und wenigstens einem in die Haftklebmasseschicht eingebrachten Filament,
**dadurch gekennzeichnet, dass** eine Oberfläche des wenigstens einen Filaments mit einem Plasma behandelt ist.

10. Klebeband nach Anspruch 9,
**dadurch gekennzeichnet, dass** das wenigstens eine Filament aus der Gruppe PET-Fasern, Kohlefasern, Keflarfasern oder Glasfasern stammt.

11. Klebeband nach Anspruch 9 oder 10,
**dadurch gekennzeichnet, dass** das wenigstens eine Filament aus mit Schlichte gebündelten Glasfasereinzelfilamenten besteht.

12. Klebeband nach einem der Ansprüche 9, 10 oder 11,
**dadurch gekennzeichnet, dass** die Haftklebmasseschicht auf einem Liner oder einer Trägerfolie, insbesondere einer PET-Folie aufgebracht ist.

## Claims

1. Method for producing an adhesive tape, by providing a pressure-sensitive adhesive layer on at least one side of a liner or a carrier film, and treating at least one filament with a plasma, and introducing the at least one filament into the pressure-sensitive adhesive layer.

2. Method according to Claim 1,
**characterized in that** a first pressure-sensitive adhesive layer is applied to the liner or the carrier film, and a surface of the at least one filament is treated with plasma and applied to the first pressure-sensitive adhesive layer, and further preferably a second adhesive layer is applied over the at least one plasma-treated filament and the first pressure-sensitive adhesive layer.

3. Method according to Claim 1 or 2,
**characterized in that** air, carbon dioxide, inert gases, or nitrogen or mixtures thereof are used as process gas for the plasma treatment.

4. Method according to Claim 3,
**characterized in that** hydrogen, alkanes, alkenes, alkynes, silanes, silicon-organic monomers, acrylate monomers, water, alcohols, peroxides and organic acids are added to the process gas in the form of vapour or aerosols.

5. Method according to one of the preceding claims, **characterized in that** the at least one filament is selected from the group of PET fibres, carbon fibres, Kevlar fibres or glass fibres.

6. Method according to one of the preceding claims, **characterized in that** the at least one filament is formed from a bundle of single filaments which are bonded with a sizing agent.

7. Method according to Claim 6,
**characterized in that** glass fibres are bundled with sizing agent to form a filament, and filaments with different sizing agents are used to produce the adhesive tape, and all filaments with different sizing agents are treated with plasma.

8. Method according to one of the preceding claims, **characterized in that** the entire extent of the at least one filament is treated with plasma.

9. Adhesive tape having a pressure-sensitive adhesive layer and at least one filament introduced into the pressure-sensitive adhesive layer,
**characterized in that** a surface of the at least one filament has been treated with a plasma.

10. Adhesive tape according to Claim 9,
**characterized in that** the at least one filament comes from the group of PET fibres, carbon fibres, Kevlar fibres or glass fibres.

11. Adhesive tape according to Claim 9 or 10,
**characterized in that** the at least one filament consists of glass fibre single filaments bundled with sizing agent.

12. Adhesive tape according to one of Claims 9, 10 or 11, **characterized in that** the pressure-sensitive adhesive layer has been applied to a liner or a carrier film, more particularly a PET film.

## Revendications

1. Procédé de préparation d'un ruban adhésif, dans lequel
une doublure ou une feuille de support est pourvue, sur au moins un côté, d'une couche de masse adhésive et
au moins un filament est traité par un plasma et l'au moins un filament est introduit dans la couche de masse adhésive.

2. Procédé selon la revendication 1, **caractérisé en ce qu'**une première couche de masse adhésive est appliquée sur la doublure ou la feuille de support et une surface de l'au moins un filament est traitée au plasma et est appliquée sur la première couche de masse adhésive et plus préférablement une deuxième couche de masse adhésive est appliquée sur l'au moins un filament traité au plasma et la première couche de masse adhésive.

3. Procédé selon la revendication 1 ou 2, **caractérisé en ce que** de l'air, du dioxyde de carbone, des gaz nobles ou de l'azote ou leurs mélanges sont utilisés en tant que gaz de processus pour le traitement au plasma.

4. Procédé selon la revendication 3, **caractérisé en ce que** de l'hydrogène, des alcanes, des alcènes, des alcynes, des silanes, des monomères organosiliciés, des monomères d'acrylate, de l'eau, des alcools, des peroxydes et des acides organiques sont ajoutés au gaz de processus en tant que vapeur ou aérosols.

5. Procédé selon l'une quelconque des revendications précédentes, **caractérisé en ce que** l'au moins un filament est choisi dans le groupe composé par des fibres de PET, des fibres de carbone, des fibres de kevlar ou des fibres de verre.

6. Procédé selon l'une quelconque des revendications précédentes, **caractérisé en ce que** l'au moins un filament est formé à partir d'un paquet de filaments individuels qui sont reliés par un ensimage.

7. Procédé selon la revendication 6, **caractérisé en ce que** des fibres de verre comportant un ensimage sont regroupées pour donner un filament et des filaments comportant différents ensimages sont utilisés pour la préparation du ruban adhésif et tous les filaments comportant des ensimages différents sont traités au plasma.

8. Procédé selon l'une quelconque des revendications précédentes, **caractérisé en ce que** l'au moins un filament est traité au plasma sur son étendue entière.

9. Ruban adhésif comportant une couche de masse adhésive et au moins un filament introduit dans la couche de masse adhésive, **caractérisé en ce qu'**une surface de l'au moins un filament est traitée par un plasma.

10. Ruban adhésif selon la revendication 9, **caractérisé en ce que** l'au moins un filament provient du groupe composé par des fibres de PET, des fibres de carbone, des fibres de kevlar ou des fibres de verre.

11. Ruban adhésif selon la revendication 9 ou 10, **caractérisé en ce que** l'au moins un filament est constitué de filaments individuels de fibres de verre regroupés avec un ensimage.

12. Ruban adhésif selon l'une quelconque des revendications 9, 10 ou 11, **caractérisé en ce que** la couche de masse adhésive est appliquée sur une doublure ou une feuille de support, en particulier sur une feuille de PET.
